# EUROPEAN PATENT APPLICATION

(11) **EP 3 054 374 A1**
(43) Date of publication of application: **10.08.2016**
(21) Application number: 14847392.9
(22) Date of filing: 26.09.2014
(51) Int. Cl.: G06F 3/041, B32B 7/02, B32B 9/00, B32B 15/08, G06F 3/044, H01B 5/14

(54) **TOUCH PANEL**

(30) Priority: 30.09.2013 JP 2013204458
(71) Applicant: Toppan Printing Co., Ltd., Tokyo 110-0016 (JP)
(72) Inventor: ITO, Yutaka, Taito-ku, Tokyo 110-0016 (JP)
(74) Representative: TBK
(86) International application number: PCT/JP2014/004949
(87) International publication number: WO 2015/045408

(57) **Abstract**

A touch panel is provided which is capable of enhancing the stability of the transparent electrode by reducing the effect of water infiltration, thereby improving the operational stability. The touch panel includes at least a transparent resin substrate, a transparent conductive film formed in a pattern, a metal wiring connected to the transparent conductive film, a transparent adhesive layer, and a sensor cover, wherein a vapor permeation rate of the transparent resin substrate is 1.0 g/m²·day or less under a condition of 40°C and 90%RH.

## Description

### [Technical Field]

The present invention relates to transparent touch panels configured by forming a transparent conductive film on a transparent substrate.

### [Background Art]

In recent years, transparent touch panels are used as an input device on displays of various electronic apparatuses. The touch panels include resistive type, capacitive type and the like. The resistive type touch panels are configured to detect a touch position when the upper and lower electrodes are brought into contact with each other. The capacitive type touch panels are configured to detect a touch position by the change in capacitance when a finger touches the surface.

In the capacitive type touch panel, when a resin substrate such as PET film is used for the sensor substrate, a cover glass is usually bonded to one surface of the sensor via a transparent adhesive layer so as to prevent water infiltration. Also, a plastic material such as a resin or film is disposed on the surface opposite to the cover glass.

As a consequence, a transparent electrode formed on the resin substrate is subject to a risk of water infiltration from the surface opposite to the cover glass, which affects stability of the transparent electrode. In order to solve the problem, PTL 1 describes a transparent conductive film which includes a gas barrier layer having a high gas barrier quality.

### [Citation List]

### [Patent Literature]

[PTL 1] JP-A-H11-105182

### [Summary of the Invention]

### [Technical Problem]

However, in the touch panel formed by using the transparent conductive film described in PTL 1, the transparent conductive film on the transparent support body can not be sufficiently protected from water infiltration from the surface opposite to the cover glass.

The present invention has been made to overcome the above problem in the conventional art, and provides a touch panel capable of enhancing the stability of the transparent electrode by reducing the effect of water infiltration, thereby improving the operational stability.

### [Solution to Problem]

In order to solve the above problem, a touch panel according to one aspect of the present invention includes at least a transparent resin substrate, a transparent conductive film formed in a pattern, a metal wiring connected to the transparent conductive film, a transparent adhesive layer, and a sensor cover, wherein a vapor permeation rate of the transparent resin substrate is 1.0 g/m²·day or less under a condition of 40°C and 90%RH.

Further, the sensor cover may be made of resin, and a vapor permeation rate of the sensor cover may be 1.0 g/m²·day or less under a condition of 40°C and 90%RH.

Further, the touch panel may include at least a transparent resin substrate, a transparent conductive film formed in a pattern, a metal wiring connected to the transparent conductive film, a transparent adhesive layer, and a sensor cover, the sensor cover being made of resin, wherein a vapor permeation rate of the touch panel may be 1.0 g/m²·day or less under a condition of 40°C and 90%RH.

Further, the transparent conductive film may include at least a metal nanowire.

Further, the metal nanowire may be covered with a resin layer.

Further, a silicon oxide compound or a silicon oxynitride compound may be disposed on the transparent resin substrate.

Further, a polymer of a silicon compound and a resin containing hydroxyl group may be disposed on the transparent resin substrate.

The present invention has an object to minimize the effect of water infiltration into at least one transparent conductive film when the transparent resin substrate is used as part of the sensor of the touch panel.

### [Advantageous Effects of Invention]

According to the present invention, in the touch panel that uses the transparent resin substrate as part of the sensor, water infiltration at least into the transparent conductive film can be minimized by sufficiently decreasing the vapor permeation rate (speed) of the adjacent resin member, thereby providing the touch panel having high operational stability and durability in a high temperature and high humidity environment.

### [Brief Description of the Drawings]

Fig. 1 is a sectional view which shows a first configuration of a touch panel according to an embodiment.
Fig. 2 is a sectional view which shows a second configuration of the touch panel according to an embodiment.
Fig. 3 is a sectional view which shows a third configuration of the touch panel according to an embodiment.
Fig. 4 is a sectional view which shows a configuration of a first comparative example of the touch panel.
Fig. 5 is a sectional view which shows a configuration of a second comparative example of the touch panel.

### [Description of Embodiments]

With reference to the drawings, embodiments of the present invention will be described. The present invention should not be construed as being limited to the following embodiments. Various modifications can be made on the basis of the knowledge of a person having ordinary skill in the art, and embodiments with such modifications are also included within the scope of the present invention.

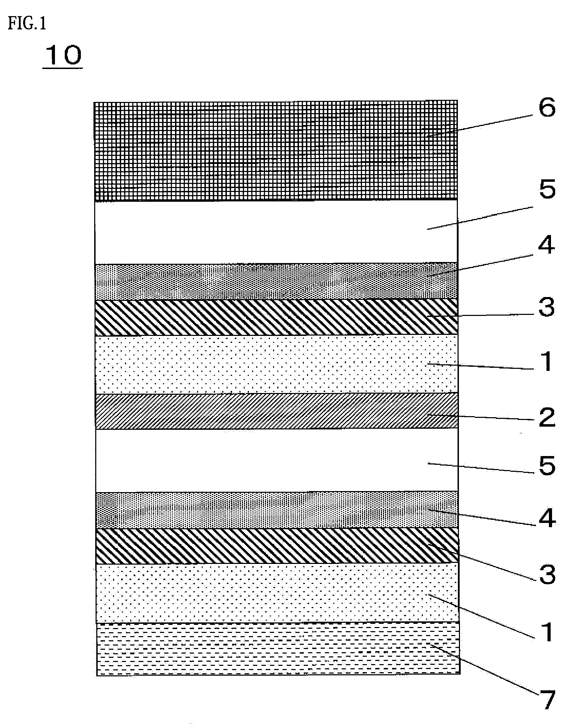

Figs. 1 to 3 show examples of a touch panel according to some embodiments.

A touch panel 10 shown in Fig. 1 has a configuration made up of a first laminate which includes a transparent resin substrate 1 and a second laminate which includes another transparent resin substrate 1 with both laminates being bonded together. The first laminate has a configuration made up of a resin layer 2 disposed on one surface of the transparent resin substrate 1, and a transparent conductive film 3 and a cured film 4 disposed in sequence on the other surface of the transparent resin substrate 1. The second laminate has a configuration made up of the transparent conductive film 3 and the cured film 4 disposed in sequence on one surface of another transparent resin substrate 1, and a vapor barrier layer 7 disposed on the other surface of the another transparent resin substrate 1. The resin layer 2 of the first laminate and the cured film 4 of the second laminate are bonded together via a transparent adhesive layer 5. Further, the cured film 4 of the first laminate is bonded to a cover lens (sensor cover) 6 via the transparent adhesive layer 5.

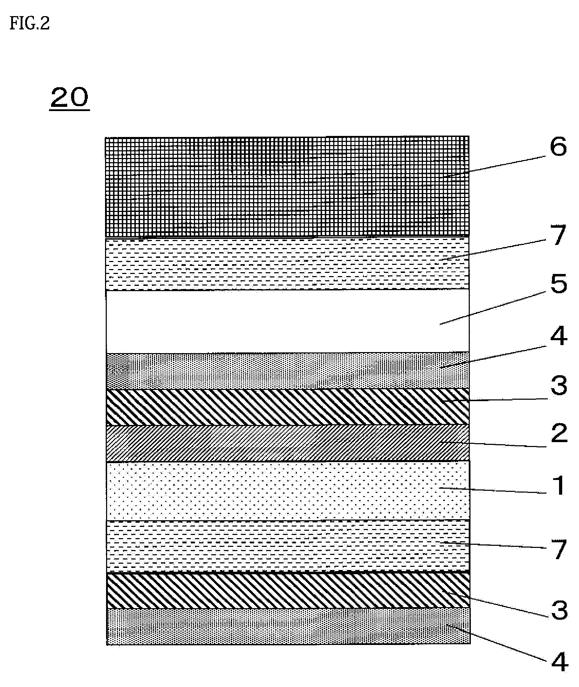

A touch panel 20 shown in Fig. 2 has a configuration made up of the resin layer 2, the transparent conductive film 3 and the cured film 4 disposed in sequence on one surface of the transparent resin substrate 1, and the vapor barrier layer 7, the transparent conductive film 3 and the cured film 4 disposed in sequence on the other surface of the transparent resin substrate 1. Further, the cured film 4 located on the one surface side of the transparent resin substrate 1 is bonded to the cover lens (sensor cover) 6 which is provided with the vapor barrier layer 7 on one surface thereof via the transparent adhesive layer 5 with the vapor barrier layer 7 facing the transparent adhesive layer 5.

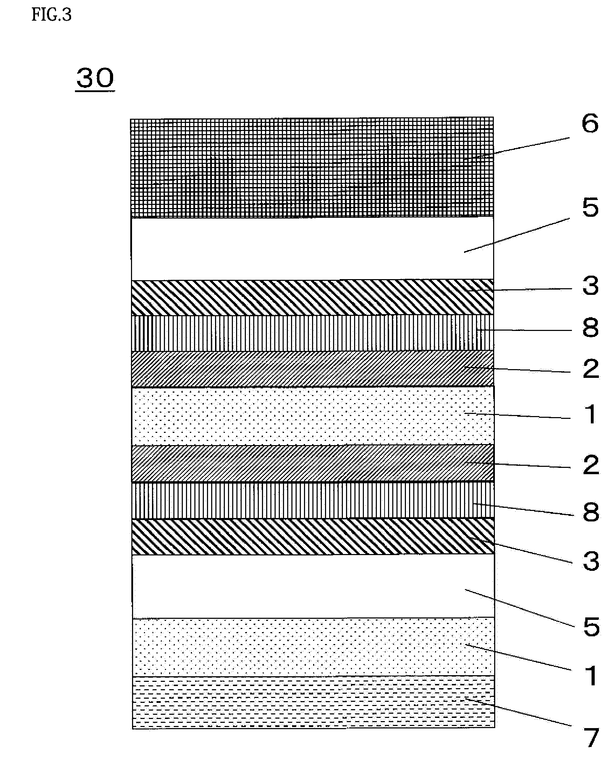

A touch panel 30 shown in Fig. 3 includes a laminate which includes the transparent resin substrate 1. The laminate has a configuration made up of the resin layer 2, an optical adjustment layer 8 and the transparent conductive film 3 disposed in sequence on one surface of the transparent resin substrate 1, and the resin layer 2, the optical adjustment layer 8 and the transparent conductive film 3 disposed in sequence on the other surface of the transparent resin substrate 1. The transparent conductive film 3 located on the other surface side of the transparent resin substrate 1 is bonded to another transparent resin substrate 1 which is provided with the vapor barrier layer 7 on one surface thereof via the transparent adhesive layer 5 with the other surface of the another transparent resin substrate 1 which is not provided with the vapor barrier layer 7 facing the transparent adhesive layer 5. Further, the transparent conductive film 3 located on the one surface side of the transparent resin substrate 1 is bonded to the cover lens (sensor cover) 6 via the transparent adhesive layer 5.

The transparent resin substrate 1 used for the present invention is a plastic film. The plastic film is not specifically limited as long as it has a sufficient strength during the film forming process and post-process and a high surface smoothness, and includes, for example, a polyethylene terephthalate film, polybutylene terephthalate film, polyethylene naphthalate film, polycarbonate film, polyethersulfone film, polysulfone film, polyarylate film, cyclic polyolefin film and polyimide film. In order to achieve the reduced thickness of the element and the flexibility of the laminate, the thickness of the transparent resin substrate 1 is of the order of 10 µm or more and 200 µm or less. Further, when the touch panel of the present invention is used on the front surface of the display, the transparent resin substrate 1 is required to have high transparency. Advantageously, the transparent resin substrate 1 has a total light transmittance of 85% or more.

Materials contained in the transparent resin substrate 1 may include various known additives and stabilizers such as anti-static agent, plasticizer, lubricant and easy-adhesion agent. In order to improve adhesion between the layers, pretreatments such as corona treatment, low temperature plasma treatment, ion bombardment treatment and chemical treatment may be performed.

The transparent resin substrate 1 of the present invention may be provided with the resin layer 2 on one or both surfaces thereof. The resin layer 2 of the present invention is provided for imparting mechanical strength to the transparent conductive film 3. Resins used for those elements may include, but are not limited to, resins having transparency, appropriate hardness and mechanical strength. Specifically, photo-curable resins such as monomers having a main component of tri- or higher functional acrylate which is expected to form a 3D cross-linked structure or cross-linking oligomers.

Preferably, the tri- or higher functional acrylate monomers include trimethylolpropane triacrylate, EO-modified isocyanurate triacrylate, pentaerythritol triacrylate, dipentaerythritol triacrylate, dipentaerythritol tetraacrylate, dipentaerythritol pentaacrylate, dipentaerythritol hexaacrylate, ditrimethylol tetraacrylate, pentaerythritol tetraacrylate and polyester acrylate. Specifically, EO-modified isocyanurate triacrylate and polyester acrylate are preferable. They may be used singly or in combination of two or more. Further, in addition to those tri- or higher functional acrylates, so called acryl-based resins such as epoxy acrylate, urethane acrylate and polyol acrylate can also be used.

Preferably, the cross-linking oligomers include acryl oligomers such as polyester (meta)acrylate, polyether(meta)acrylate, polyurethane(meta)acrylate, epoxy (meta)acrylate and silicone (meta)acrylate. Specifically, polyethylene glycol di(meta)acrylate, polypropylene glycol di(meta)acrylate, bisphenol A epoxy acrylate, diacrylate of polyurethane, and cresol novolac epoxy (meta) acrylate may be used.

The resin layer 2 may further contain additives such as particles or photopolymerization initiator.

The particles added include organic or inorganic particles. However, taking into consideration the transparency, organic particles are preferable. The organic particles may be particles formed of acryl resin, polystyrene resin, polyester resin, polyolefin resin, polyamide resin, polycarbonate resin, polyurethane resin, silicone resin and fluororesin.

The average particle diameter varies depending on the thickness of the resin layer 2. For the reason of outer appearance such as haze, the lower limit of the particle diameter is preferably 2 µm or more, more preferably 5 µm or more, and the upper limit of the particle diameter is preferably 30 µm or less, more preferably 15 µm or less. Further, for the same reason, the content of the particles is preferably 0.5 wt% or more and 5 wt% or less of the resin.

When a photopolymerization initiator is added, the radical-generating photopolymerization initiator that can be used includes benzoins such as benzoin, benzoin methyl ether, benzoin ethyl ether, benzoin isopropyl ether, benzyl methyl ketal, and alkyl ethers thereof, acetophenones such as acetophenone, 2,2-dimethoxy-2-phenyl acetophenone, 1-hydroxycyclohexyl phenyl ketone, anthraquinones such as methyl anthraquinone, 2-ethyl anthraquinone, 2-amylanthraquinone, thioxanthones such as thioxanthone, 2,4-diethylthioxanthone, 2,4-diisopropylthioxanthone, ketals such as acetophenone dimethyl ketal, benzyl dimethyl ketal, benzophenones such as benzophenone, 4,4-bismethyl aminobenzophenone or azo compounds. They can be used singly or as a mixture of two or more, or alternatively, can be used in combination with a photoinitiation assistant, for example, tertiary amines such as triethanolamine and methyldiethanolamine, or benzoic acid derivatives such as 2-dimethylamino ethylbenzoate and 4-dimethylamino ethylbenzoate.

The addition amount of the photopolymerization initiator is in the range of 0.1 wt% or more and 5 wt% or less, and more preferably, 0.5 wt% or more and 3 wt% or less of the main component resin. If the amount is less than the lower limit, a hard coating layer is not sufficiently cured, which is not desirable. Further, if the amount is over the upper limit, the hard coating layer has a yellow discoloration or decreases in weather resistance, which is not desirable. Light used for curing a photo-curable resin is ultraviolet rays, electron beams, gamma rays or the like. In the case of electron beams or gamma rays, a photopolymerization initiator or a photoinitiation auxiliary may not necessarily be added. The radiation source may be a high pressure mercury lamp, xenon lamp, metal halide lamp, accelerated electron generator or the like.

Further, although the thickness of the resin layer 2 is not specifically limited, it is preferably in the range of 0.5 µm or more and 15 µm or less. More preferably, the resin layer 2 has the same or approximately same refractive index as that of the transparent resin substrate 1, which is preferably in the order of 1.45 or more and 1.75 or less.

A method of forming the resin layer 2 includes dissolving a main component resin or the like into a solvent and applying it by a known coating method such as a die coater, curtain flow coater, roll coater, reverse roll coater, gravure coater, knife coater, bar coater, spin coater and micro gravure coater.

The solvent is not specifically limited as long as it dissolves the above main component resin or the like. Specifically, materials that can be used as the solvent include ethanol, isopropyl alcohol, isobutyl alcohol, benzene, toluene, xylene, acetone, methyl ethyl ketone, methyl isobutyl ketone, ethyl acetate, n-butyl acetate, isoamyl acetate, ethyl lactate, methyl cellosolve, ethyl cellosolve, butyl cellosolve, methyl cellosolve acetate and propyleneglycol monomethyl ether acetate. Those solvent may be used singly or in combination of two or more.

The transparent conductive film 3 is made of an oxide, which includes any of indium oxide, zinc oxide and tin oxide, or a mixture of two or three thereof, or a mixture with any other additive. The material is not specifically limited, and a variety of materials may be used depending on the purpose and use application. The material which is currently most reliable and with which there is much experience is indium tin oxide (ITO).

When indium tin oxide (ITO), which is the most commonly used material, is used for the transparent conductive film 3, the content ratio of tin oxide doped to indium oxide may be appropriately selected depending on the specification required for a device. For example, in the case of the transparent resin substrate made of a plastic film, the sputtering target material used to crystallize a thin film for improving mechanical strength preferably has a tin oxide content ratio of less than 10 wt%, and the material used to amorphize a thin film for providing flexibility preferably has a tin oxide content ratio of 10 wt% or more. Further, when low resistance is required for a thin film, the tin oxide content ratio is preferably in the range of 2 to 20 wt%.

When the transparent conductive film 3 is made of an oxide, it may be formed by any manufacturing method as long as the film thickness can be controlled, and in particular, a dry coating method for thin film is advantageously used. This includes a vacuum deposition method, a physical vapor phase deposition method such as sputtering and a chemical vapor phase deposition method such as CVD method. Particularly, a sputtering method is preferable to form a thin film of a uniform quality across a large area, since it has a stable process and forms a highly precise thin film. Further, when the transparent conductive film is patterned by a method such as etching, an optical adjustment layer can be provided so that the pattern is not easily seen by visual observation. The optical adjustment layer can be provided by forming a thin film of inorganic compounds or organic compounds having a predetermined refractive index and adjusting the transmission ratio, reflection ratio, hue and the like between the portions having the transparent conductive film and not having the transparent conductive film so as to provide pattern invisibility. Further, an adhesion layer made of metal, metal oxide, resin or silane coupling agent may be provided as an underlayer of the transparent conductive film 3 or the optical adjustment layer.

Further, the transparent conductive film 3 may be made of materials such as metal particles, metal nanowires, carbon nanotubes, graphenes, and conductive polymers, and can be formed by dissolving or dispersing those materials in an organic solvent, alcohol, water or the like and coating and drying those materials. Taking into consideration the sheet resistance or transparency as a transparent conductive film, metal nanowires are more preferably used.

Metal nanowires can be mixed with resins or the like, and dispersed in water, alcohol, organic solvent or the like for preparing liquid. The liquid can be applied and dried to form a mesh of metal nanowires that provides an effective conductive path with a small amount of conductive materials, thereby reducing resistance of the conductive layer. Further, when such a mesh is formed, the mesh has large apertures. Accordingly, if the conductive material in the form of fibers is not transparent, the conductive material as a coating film can have high transparency. The metal nanowires may also be covered with a resin layer.

Examples of metal of metal nanowires include, for example, iron, cobalt, nickel, copper, zinc, aluminum, titanium, ruthenium, rhodium, palladium, silver, cadmium, osmium, iridium, platinum and gold. In view of conductivity, gold, silver, copper and platinum are preferable.

A method for forming the transparent conductive film 3 on the transparent resin substrate 1 by using metal nanowires may be a known coating method such as a spray coating, bar coating, roll coating, die coating, ink jet coating, screen coating or dip coating.

When the thickness of the transparent conductive film 3 is too small, it is difficult to achieve a sufficient conductivity as a conductor. When the thickness of the transparent conductive film 3 is too large, the haze value tends to increase and the total light transmission ratio tends to decrease, thereby reducing transparency. Usually, the film thickness is adjusted as appropriate in the range of 10 nm or more and 10 µm or less. However, when the conductive material itself is not transparent as in the case of metal nanowires, the conductive layer is often formed to have a small thickness since increase in the film thickness tends to decrease the transparency. In this case, the film thickness on average, which is measured by a film thickness meter despite many apertures being formed in the conductive layer, is preferably 10 nm or more and 500 nm or less, more preferably 30 nm or more and 300 nm or less, and most preferably 50 nm or more and 150 nm or less.

The cured film 4 may be provided for protecting the transparent conductive film 3 and imparting mechanical strength to the transparent conductive film 3. Resins used are preferably, but not limited to, resins having transparency, appropriate hardness and mechanical strength. Specifically, photo-curable resins such as monomers having a main component of tri- or higher functional acrylate which is expected to form a 3D cross-linked structure or cross-linking oligomers are preferable, and the same materials as those of the resin layer 2 may be used. A manufacturing method may also be the same as the resin layer 2. When an oxide is used for the transparent conductive film 3, the cured film 4 is not usually provided.

When used as a touch panel sensor, the transparent conductive film 3 is formed in a pattern of rectangles, diamonds or the like. A conductive pattern area is in contact with a metal wiring and is connected to a circuit that detects a change in voltage. When a user's finger or the like is close to the conductive pattern area which is a detection electrode, a change in total capacitance occurs, which causes a circuit voltage change. Accordingly, the contact position can be detected. The pattern of the transparent conductive film is made up of arrays of drive electrodes and arrays of sensing electrodes, and each of the arrays are connected to the voltage change detection circuit so that two dimensional positional information can be obtained.

A method of manufacturing a pattern of the transparent conductive film 3 includes a photolithography method which includes applying or affixing a resist on the transparent conductive film 3, forming a pattern by light-exposure or development, and then chemically etching the transparent conductive film 3, a method using chemical vaporization under vacuum, and a method using ablation of the transparent conductive film 3 by laser radiation. Although the pattern-forming method can be appropriately selected depending on the shapes and precisions of the pattern, a photolithography method is preferable in view of pattern precision and thinning of the pattern.

The present invention is characterized in using the transparent resin substrate 1 having the vapor barrier layer 7. The vapor barrier layer 7 may be an inorganic oxide film or an oxynitride film, or an organic and inorganic hybrid film formed by polycondensation of silicon compounds such as silane coupling agent and a resin containing hydroxyl group.

An inorganic oxide film or an oxynitride film used for the vapor barrier layer 7 is made of, for example, silicon compounds such as silicon oxide SiOx and silicon oxynitride SiNxOy, although the central metal ion is not limited thereto, and may be Ti, Al, Cr, Zr or the like as appropriate.

The inorganic oxide film or oxynitride film is preferably formed by vacuum film deposition. The vacuum film deposition may use physical vapor deposition or chemical vapor deposition. The physical vapor deposition includes, but is not limited to, vapor deposition, sputter deposition and ion plating. The chemical vapor deposition includes, but is not limited to, thermal CVD, plasma CVD and light CVD.

Particularly, resistance heating vacuum deposition, electron beam (EB) heating vacuum deposition, induction heating vacuum deposition, sputtering, reactive sputtering, dual magnetron sputtering, plasma chemical vapor deposition (PECVD) and the like are preferably used.

The inorganic oxide film or oxynitride film of the present invention has a thickness of preferably 5 nm or more and 100 nm or less. When the film thickness is less than 5 nm, a sufficient barrier performance can not be obtained. Further, when the thickness of the cured film is larger than 100 nm, cracks may be formed due to increase in curing shrinkage, thereby reducing a barrier performance. In addition, the cost increases due to increase in material use, increase in the period of time for film forming and the like, which is not desirable from an economic viewpoint.

When an organic and inorganic hybrid film formed by polycondensation of silane coupling agent and a resin containing hydroxyl group is used for the vapor barrier layer 7, the silane coupling agent includes compounds typically expressed by R¹(Si-OR²), such as tetramethoxysilane, tetraethoxysilane, tetrapropoxysilane, tetrabutoxysilane, methyltrimethoxysilane, methylethoxysilane, dimethyldimethoxysilane and dimethyldiethoxysilane. Further, the resin containing hydroxyl group includes an acryl resin containing hydroxyl group, polyester resin containing hydroxyl group or polyvinyl alcohol. Although any material of those compound systems can be used without limitation of the structure, a material having miscibility with resins containing a silanol group needs to be selected.

At least two types of the above materials are appropriately selected, mixed together, applied, dried and cured to form the vapor barrier layer 7. The application method may be a known method, which is specifically a wet film-forming method such as a gravure coater, dip coater, reverse coater, wire bar coater or die coater. The curing method is not specifically limited, but includes UV-setting and thermo setting. In the case of UV-setting, a polymerization initiator or double bond is necessary. In addition, thermal aging may be performed as necessary.

Alternatively, another metal material may be mixed or replaced with the silane coupling agent. Specifically, the compounds expressed by R¹(Ti-OR²) having Ti as a metal atom include tetramethoxy titanium, tetraethoxy titanium, tetraisopropoxy titanium and tetrabutoxy titanium. Specifically, the compounds expressed by R¹(Al-OR²) having Al as a metal atom include tetramethoxy aluminum, tetraethoxy aluminum, tetraisopropoxy aluminum and tetrabutoxy aluminum, and the compounds expressed by R¹(Zr-OR²) having Zr as a metal atom include tetramethoxy zirconium, tetraethoxy zirconium, tetraisopropoxy zirconium and tetrabutoxy zirconium. In addition, a leveling agent, antifoaming agent, UV absorbing agent, anti-oxidation agent, silane coupling agent or titanium chelating agent may be added as necessary.

Preferably, the organic and inorganic hybrid film formed by polycondensation of silane coupling agent and a resin containing hydroxyl group has a thickness of 100 nm or more and 5 µm or less, and more preferably, the upper limit of the film thickness is 1 µm or less, taking into consideration the productivity and the cost.

The inorganic oxide film, oxynitride film, and organic and inorganic hybrid film formed by polycondensation of silane coupling agent and a resin containing hydroxyl group may be used as a single layer or as a stack of those films so as to improve the vapor barrier property.

The vapor permeation rate was measured in compliance with JIS-K7129 by using the Permatran, manufactured by MOCON Inc., under the condition of 40°C and 90%RH. In this embodiment, the vapor permeation rate of the transparent resin substrate 1 or the vapor permeation rate of the touch panel was 1.0 g/m²·day or less under the condition of 40°C and 90%RH. Further, the vapor permeation rate of the transparent resin substrate 1 and the cover lens 6 may be 1.0 g/m²·day or less under the condition of 40°C and 90%RH. According to the present invention, in the touch panel that uses the transparent resin substrate as part of the sensor, water infiltration at least into the transparent conductive film can be minimized by sufficiently decreasing the vapor permeation rate (speed) of the adjacent resin member, thereby providing the touch panel having high operational stability and durability in a high temperature and high humidity environment.

The base material which forms the vapor barrier layer 7 may include an additive as necessary, such as antistatic agent, UV absorbing agent, plasticizer or lubricant. Further, modification treatments such as a corona treatment, frame treatment, plasma treatment or easy-adhesion treatment may be performed on the surface of the base material, or an anchor coat layer of acryl resin or urethane resin may be provided in an off-line process. The surface of the base material is desired to be flat and smooth since it contributes to preciseness and adhesiveness in an initial deposition stage of the vacuum film deposition.

In the present invention, the transparent conductive film 3 is used as a capacitance detection sensor. The transparent conductive film 3 may be disposed on each surface of one transparent resin substrate 1, or alternatively, the transparent conductive films 3 may be patterned on separate transparent resin substrates 1 and bonded together via the transparent adhesive layer 5, and disposed at upper and lower positions. Since the electrodes formed by the transparent conductive films 3 are connected to a metal wiring and connected to a circuit that detects a change in voltage between the upper electrode and the lower electrode formed by the transparent conductive films 3, the transparent conductive film 3 operates as a capacitive type touch sensor. Finally, the touch sensor is bonded to the cover lens 6 via the transparent adhesive layer 5, and accordingly, the touch panel can be manufactured. The cover lens 6 may be a glass, or alternatively, a sheet of resin or plastic material with a hard coat processing applied on the surface.

The present invention will be described below in detail by means of specific examples. However, these example are for explanation purposes, and the present invention is not limited to those examples.

### <Example 1>

The touch panel 10 having the same layer configuration as that of Fig. 1 was fabricated. PET (125 µm) was used for the transparent resin substrate 1. A UV-curable transparent acryl resin used as the resin layer 2 was applied on one surface of the transparent resin substrate 1 by a micro gravure coating, and dried and UV-cured so as to form the resin layer of a thickness of 3 µm. Silver nanowires were applied as the transparent conductive film 3 by slot die coating at a sheet resistance of 100Ω/sq. on the surface of the substrate which is opposite to the resin layer 2, and a UV-curable transparent acryl resin was applied as the cured film 4 at a thickness of 130 nm on the transparent conductive film 3. The substrate provided with the transparent conductive film was exposed to light and developed by using a photoresist in a photolithography method, and then etched and stripped for forming a pattern on the transparent conductive film 3 as the upper electrode.

Subsequently, PET (125 µm) was used for another transparent resin substrate 1. SiOx/(polycondensation film of tetraethoxysilane and polyvinyl alcohol) used as the vapor barrier layer 7 was formed on one surface of the another transparent resin substrate 1. In the PET, a polyester resin was applied in advance by a bar coating method, and dried and cured for 1 minute at 80°C so as to form a film of 100 nm. In the SiOx layer, a silicon oxide material (SiO) was evaporated by using a vacuum deposition device of an electronic beam heating type so as to form a film with 40 nm of cured film thickness under 1.5 x 10⁻² Pa of pressure during film formation. Further, a coating liquid made of a mixture of hydrolysate of tetraethoxysilane and polyvinyl alcohol at 1 to 1 weight ratio was applied on the SiOx film by a bar coating method, and cured for 1 minute at 120°C to form a film of 200 nm.

A vapor permeation rate of the thus formed PET/SiOx/(polycondensation film of tetraethoxysilane and polyvinyl alcohol) was measured, and the result was 0.5 g/m²·day. Similarly, silver nanowires as the transparent conductive film 3 and the cured film 4 were formed on the surface of the substrate which is opposite to the vapor barrier layer 7, and exposed to light and developed by using a photoresist in a photolithography method, and then etched and stripped for forming a pattern on the transparent conductive film as the lower electrode. In photolithography, the development of the photo resist was performed by using a sodium carbonate solution, the silver nanowire is etched by using a ferric chloride solution, and the resist was stripped by using a sodium hydroxide solution. On the thus formed transparent conductive films 3 of the upper electrode and the lower electrode, an upper electrode wiring and a lower electrode wiring were formed, respectively, by screen printing of a silver paste pattern, and heated for 30 minutes at 90°C so that a wiring pattern is provided. The PET substrates provided with the upper electrode and the lower electrode were bonded to each other by using a transparent adhesive layer 5 which was 75 µm thick so as to form a configuration of Fig. 1. Further, the cover lens 6 which was 0.55mm thick was bonded to the outermost surface, and accordingly, the touch panel 10 was provided.

For the operation of the touch panel 10, a drive LSI was connected to the silver wiring via the flexible printed board for an operation check. A finger contact and the coordinate position were successfully detected. After the touch panel was operated for 240 hours in an environment of 60°C and 90%RH, the touch panel was removed from an environment test device. Then, an operation check was performed in the same manner as described above. As a result, a finger contact and the coordinate position were successfully detected.

### <Example 2>

The touch panel 20 having the same layer configuration as that of Fig. 2 was fabricated. PET (188 µm) was used for the transparent resin substrate 1. A UV-curable transparent acryl resin used as the resin layer 2 was applied on one surface of the transparent resin substrate 1 by a micro gravure coating, and dried and UV-cured so as to form the resin layer of a thickness of 5 µm. A UV-absorbing agent was added to the resin layer 2 by 25 wt% so that a transmission ratio of ultra-violet light of 365 nm wavelength became 0.9%. Further, on the surface of the substrate which is opposite to the resin layer 2, SiOx/(polycondensation film of tetraethoxysilane and polyvinyl alcohol) was formed as the vapor barrier layer 7. As an underlayer of the SiOx, a polyester resin was applied in advance by a bar coating method, and dried and cured for 1 minute at 80°C so as to form a film of 100 nm. In the SiOx layer, a silicon oxide material (SiO) was evaporated by using a vacuum deposition device of an electronic beam heating type so as to form a film with 40 nm of cured film thickness under 1.5 x 10⁻² Pa of pressure during film formation. Further, a coating liquid made of a mixture of hydrolysate of tetraethoxysilane and polyvinyl alcohol at 1 to 1 weight ratio was applied on the SiOx film by a bar coating method, and cured for 1 minute at 120°C to form a 500 nm film. A vapor permeation rate of the thus formed resin layer/PET/SiOx/(polycondensation film of tetraethoxysilane and polyvinyl alcohol) was measured, and the result was 0.3 g/m²·day.

Silver nanowires were applied as the transparent conductive films 3 by slot die coating at a sheet resistance of 80Ω/sq. on each of the resin layer 2 and the vapor barrier layer 7, and UV-curable transparent acryl resins were applied as the cured films 4 at a thickness of 130 nm on the transparent conductive films 3. The substrate provided with the transparent conductive films was exposed to light and developed by a photolithography method on both surfaces simultaneously. Then, the substrate was etched and stripped for forming a pattern on the transparent conductive films 3 as the upper and lower electrodes. In photolithography, the development of the photo resist was performed by using a sodium carbonate solution, the silver nanowires are etched by using a ferric chloride solution, and the resist was stripped by using a sodium hydroxide solution.

On the transparent conductive film 3 of the upper electrode and the lower electrode, an upper electrode wiring and a lower electrode wiring were formed, respectively, by screen printing of a silver paste pattern, and heated for 30 minutes at 90°C so that a wiring pattern is provided. The PET substrates provided with the upper electrode and the lower electrode were bonded to each other by using the transparent adhesive layer 5 which was 150 µm thick so as to form a configuration of Fig. 2. Further, a PET resin cover which was 200 µm thick was bonded to the outermost surface as the cover lens 6 and accordingly, the touch panel 20 was provided. On one surface of the PET resin cover, SiOx/(polycondensation film of tetraethoxysilane and polyvinyl alcohol) was formed as the vapor barrier layer 7 in the same manner as described above. A vapor permeation rate of the thus formed touch panel was measured, and the result was 0.07 g/m²·day.

For the operation of the touch panel 20, a drive LSI was connected to the silver wiring via the flexible printed board for an operation check. A finger contact and the coordinate position were successfully detected. After the touch panel 20 was operated for 240 hours in an environment of 60°C and 90%RH, the touch panel was removed from an environment test device. Then, an operation check was performed in the same manner as described above. As a result, a finger contact and the coordinate position were successfully detected.

### <Example 3>

The touch panel 30 having the same layer configuration as that of Fig. 3 was fabricated. PET (125 µm) was used for the transparent resin substrate 1. A UV-curable transparent acryl resin with 20 wt% of UV absorbing agent added was applied on both surfaces of the transparent resin substrate 1 as the resin layers 2 by a micro gravure coating, and dried and UV-cured so as to form the resin layer of a thickness of 5 µm. Further, a UV-curable acryl resin containing zirconia particles was disposed on the surfaces of the resin layers 2 as the optical adjustment layers 8 at a thickness of 90 nm. A refractive index of the optical adjustment layer 8 was 1.70. Further, an ITO (tin content 5 wt%) was formed as the transparent conductive films 3 by vacuum DC magnetron sputtering at a thickness of 22 nm on each surface of the substrate, and annealed for 60 minutes at 150°C so as to obtain a sheet resistance of 150Ω/sq. for a single surface. The substrate provided with the transparent conductive films on both surfaces was exposed to light and developed by using a photo resist in a photolithography method in the same manner as Example 2. Then, the substrate was etched and stripped for forming a pattern on the transparent conductive films 3 as the upper electrode and the lower electrode. Further, a silver wiring was also formed in the same manner as Example 2.

On the lower electrode of the thus formed substrate, PET (25 µm) provided with the vapor barrier layer 7 was bonded via the transparent adhesive layer 5 which was 75 µm thick. The vapor barrier layer 7 was formed in the same manner as Example 1. A vapor permeation rate of the PET provided with the vapor barrier layer 7 was 0.5 g/m²·day.

Finally, a 0.55 mm thick cover lens 6 is bonded via the 75 µm thick transparent adhesive layer 5, and accordingly, the touch panel 30 was provided. For operation of the touch panel touch panel 30, a drive LSI was connected to the silver wiring via the flexible printed board for an operation check. A finger contact and the coordinate position were successfully detected. After the touch panel was operated for 240 hours in an environment of 60°C and 90%RH, the touch panel was removed from an environment test device. Then, an operation check was performed in the same manner as described above. As a result, a finger contact and the coordinate position were successfully detected.

### <Comparative Example 1>

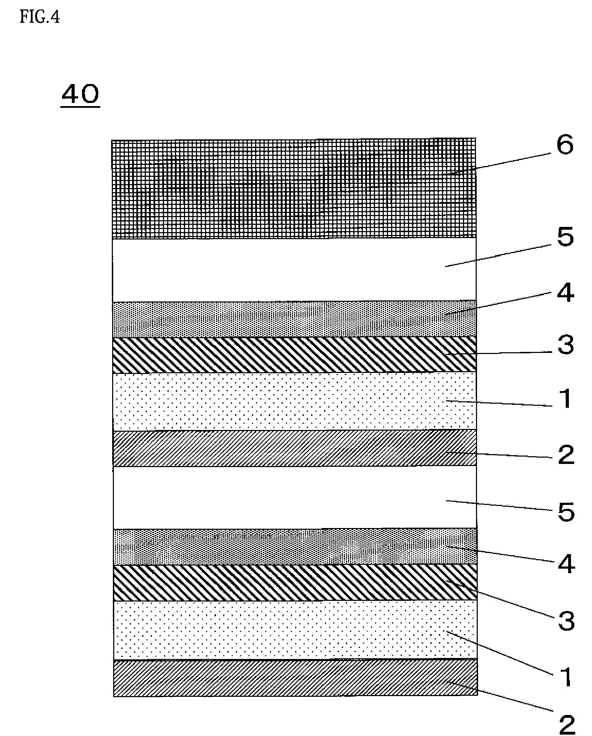

Fig. 4 shows a touch panel 40 according to Comparative Example 1. The touch panel 40 has the same configuration as that of the touch panel 10 except for the vapor barrier layer 7 of the touch panel 10 in Fig. 1 being replaced with the resin layer 2, and was fabricated in the same manner as Example 1. A vapor permeation rate of the PET/resin layer before the transparent conductive film 3 was provided was 6 g/m²·day. The touch panel 40 immediately after fabrication operated normally, and a finger contact and the coordinate position were successfully detected. However, when the same operation check was performed after the touch panel 40 was operated for 240 hours in an environment of 60°C and 90%RH and then removed from an environment test device, a short circuit between some of the electrodes occurred, and the touch panel did not operate normally. It seemed that the electrodes were damaged due to the effect of water infiltration into the touch panel sensor.

### <Comparative Example 2>

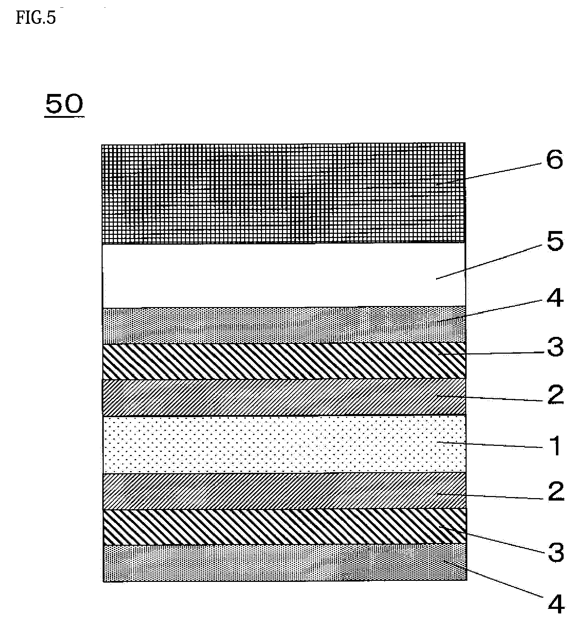

Fig. 5 shows a touch panel 50 according to Comparative Example 2. The touch panel 50 has the same configuration as that of the touch panel 20 except for the vapor barrier layer 7 on the PET substrate of the touch panel 20 in Fig. 2 being replaced with the resin layer 2 and the vapor barrier layer 7 on the PET cover lens being removed, and was fabricated in the same manner as Example 2. A vapor permeation rate of the resin layer/PET/resin layer before the transparent conductive film was provided was 4 g/m²·day, and a vapor permeation rate of the resultant touch panel 50 was 2 g/m²·day. The touch panel 50 immediately after fabrication operated normally, and a finger contact and the coordinate position were successfully detected. However, when the same operation check was performed after the touch panel 50 was operated for 240 hours in an environment of 60°C and 90%RH and then removed from an environment test device, a short circuit between some of the electrodes occurred, and the touch panel did not operate normally. It seemed that the electrodes were damaged due to the effect of water infiltration into the touch panel sensor.

### [Industrial Applicability]

The touch panel of the present invention is specifically applied to a capacitive type touch panel, and may be used as a user interface provided on the front surface of smartphones, tablets or note PCs.

### Reference Signs List

- 1: transparent resin substrate
- 2: resin layer
- 3: transparent conductive film
- 4: cured film
- 5: transparent adhesive layer
- 6: cover lens
- 7: vapor barrier layer
- 8: optical adjustment layer
- 10, 20, 30: touch panel
- 40, 50: comparative example touch panel

## Claims

1. A touch panel at least comprising:
a transparent resin substrate;
a transparent conductive film formed in a pattern;
a metal wiring connected to the transparent conductive film;
a transparent adhesive layer; and
a sensor cover, wherein a vapor permeation rate of the transparent resin substrate is 1.0 g/m²·day or less under a condition of 40°C and 90%RH.

2. The touch panel according to claim 1, wherein the sensor cover is made of resin, and a vapor permeation rate of the sensor cover is 1.0 g/m²·day or less under a condition of 40°C and 90%RH.

3. A touch panel at least comprising:
a transparent resin substrate;
a transparent conductive film formed in a pattern;
a metal wiring connected to the transparent conductive film;
a transparent adhesive layer; and
a sensor cover, the sensor cover being made of resin, wherein a vapor permeation rate of the touch panel is 1.0 g/m²·day or less under a condition of 40°C and 90%RH.

4. The touch panel according to any one of claims 1 to 3, wherein the transparent conductive film includes at least metal nanowires.

5. The touch panel according to claim 4, wherein the metal nanowires are covered with a resin layer.

6. The touch panel according to any one of claims 1 to 5, wherein a silicon oxide compound or a silicon oxynitride compound is disposed on the transparent resin substrate.

7. The touch panel according to any one of claims 1 to 6, wherein a polymer of a silicon compound and a resin containing hydroxyl group is disposed on the transparent resin substrate.
